# EUROPEAN PATENT APPLICATION

(11) **EP 4 598 142 A1**
(43) Date of publication of application: **06.08.2025**
(21) Application number: 22960123.2
(22) Date of filing: 29.09.2022
(51) Int. Cl.: H04W 52/02

(54) **WIRELESS COMMUNICATION METHOD AND APPARATUS, DEVICE, STORAGE MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Novagraaf Technologies
(86) International application number: PCT/CN2022/122848
(87) International publication number: WO 2024/065487

(57) **Abstract**

A wireless communication method and apparatus, a device, a storage medium, and a program product, relating to the technical field of communications. The method comprises: a network device sends first configuration information to a terminal device, the first configuration information being used for determining wake-up signal resources, and the wake-up signal resources comprising a resource used for sending a wake-up signal to the network device (210); and the terminal device determines first wake-up signal resources according to the first configuration information, the first wake-up signal resources comprising wake-up signal resources available to the terminal device (220). The terminal device can obtain wake-up signal resources configured therefor by the network device, and then determine an available first wake-up signal resource according to the requirements of the terminal device; when the network device is in a sleep mode, the terminal device can send a wake-up signal to the network device by using the first wake-up signal resource, thereby avoiding the disadvantage of the communication transmission delay of the terminal device being too great as a result of a network device in a sleep mode being unable to serve the terminal device for a long period of time.

## Description

### TECHNICAL FIELD

Embodiments of the present disclosure relate to the technical field of communications, and in particular, relate to a method and apparatus for wireless communication, and a device, a storage medium and a program product thereof.

### BACKGROUND

In systems for wireless communication, technologies related to network energy saving have been introduced, and network devices may be in a sleep mode for periods of time, thereby achieving energy saving. Therefore, communication between terminal devices and network devices requires further research.

### SUMMARY

Embodiments of the present disclosure provide a method and apparatus for wireless communication, and a device, a storage medium and a program product thereof. The technical solutions are as follows.

According to some embodiments of the present disclosure, a method for wireless communication is provided. The method is applicable to a terminal device, and includes:
receiving first configuration information, wherein the first configuration information is used for determining a wake-up signal resource, wherein the wake-up signal resource includes a resource used for transmitting a wake-up signal to a network device; and
determining a first wake-up signal resource based on the first configuration information, wherein the first wake-up signal resource includes a wake-up signal resource accessible by the terminal device.

According to some embodiments of the present disclosure, a method for wireless communication is provided. The method is applicable to a network device, and includes:
transmitting first configuration information to a terminal device, wherein the first configuration information is used for determining a first wake-up signal resource, wherein the first wake-up signal resource includes a wake-up signal resource accessible by the terminal device, wherein the wake-up signal resource includes a resource used for transmitting a wake-up signal to the network device.

According to some embodiments of the present disclosure, an apparatus for wireless communication is provided. The apparatus includes:
a receiving module, configured to receive first configuration information, wherein the first configuration information is used for determining a wake-up signal resource, wherein the wake-up signal resource includes a resource used for transmitting a wake-up signal to a network device; and
a processing module, configured to determine a first wake-up signal resource based on the first configuration information, wherein the first wake-up signal resource includes a wake-up signal resource accessible by a terminal device.

According to some embodiments of the present disclosure, an apparatus for wireless communication is provided. The apparatus includes:
a transmitting module, configured to transmit first configuration information to a terminal device, wherein the first configuration information is used for determining a first wake-up signal resource, wherein the first wake-up signal resource includes a wake-up signal resource accessible by the terminal device, wherein the wake-up signal resource includes a resource used for transmitting a wake-up signal to a network device.

According to some embodiments of the present disclosure, a terminal device is provided. The terminal device includes a processor and a memory. The memory is configured to store one or more computer programs, wherein the processor, when loading and running the one or more computer programs, is caused to perform the method applicable to the terminal device described above.

According to some embodiments of the present disclosure, a network device is provided. The network device includes a processor and a memory. The memory is configured to store one or more computer programs, wherein the processor, when loading and running the one or more computer programs, is caused to perform the method applicable to the network device described above.

According to some embodiments of the present disclosure, a computer-readable storage medium is provided. The storage medium stores one or more computer programs, wherein the one or more computer programs, when loaded and run by a processor, cause the processor to perform the method applicable to the terminal device or the method applicable to the network device described above.

According to some embodiments of the present disclosure, a chip is provided. The chip includes a programmable logic circuit and/or one or more program instructions, wherein the chip, when running, is caused to perform the method applicable to the terminal device or the method applicable to the network device described above.

According to some embodiments of the present disclosure, a computer program product is provided. The computer program product includes one or more computer instructions stored in a computer-readable storage medium. The one or more computer instructions, when read from the computer-readable storage medium and executed by a processor, cause the processor to perform the method applicable to the terminal device or the method applicable to the network device described above.

According to some embodiments of the present disclosure, a system for wireless communication is provided. The system includes a terminal device and a network device, wherein the terminal device is configured to perform the method applicable to the terminal device described above, and/or the network device is configured to perform the method applicable to the network device described above.

The technical solutions according to the embodiments of the present disclosure achieve the following beneficial effects:

A terminal device is capable of acquiring a wake-up signal resource configured therefor by a network device, and then determining an accessible first wake-up signal resource based on its own requirement. In the case that the network device is in a sleep mode, the terminal device may use the first wake-up signal resource to transmit a wake-up signal to the network device, and the network device is woken up to provide a service for the terminal device. In this way, the problem that a communication transmission delay of the terminal device is too long because the network device in the sleep mode is incapable of serving the terminal device for a long time is addressed, such that the performance of data transmission between the terminal device and the network device is improved.

### BRIEF DESCRIPTION OF DRAWINGS

FIG. 1 is a schematic diagram of a network architecture according to some embodiments of the present disclosure;
FIG. 2 is a flowchart of a method for wireless communication according to some embodiments of the present disclosure;
FIG. 3 is a flowchart of a method for wireless communication according to some other embodiments of the present disclosure;
FIG. 4 is a schematic diagram of effective and ineffective wake-up signal resources according to some embodiments of the present disclosure;
FIG. 5 is a block diagram of an apparatus for wireless communication according to some embodiments of the present disclosure;
FIG. 6 is a block diagram of an apparatus for wireless communication according to some other embodiments of the present disclosure;
FIG. 7 is a schematic structural diagram of a terminal device according to some embodiments of the present disclosure; and
FIG. 8 is a schematic structural diagram of a network device according to some embodiments of the present disclosure.

### DETAILED DESCRIPTION

For clearer descriptions of the objectives, technical solutions, and advantages of the present disclosure clearer, embodiments of the present disclosure are further described in detail hereinafter with reference to the accompanying drawings.

A network architecture and a service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with evolution of the network architecture and emergence of a new service scenario, the technical solutions according to the embodiments of the present disclosure are also applicable to a similar technical problem.

The technical solutions of the embodiments of the present disclosure are applicable to various communication systems, such as a global system for mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5^{th} generation (5G) system, or another communication system.

Generally, a conventional communication system supports a limited quantity of connections and is easy to implement. However, with development of communication technologies, a mobile communication system supports not only conventional communications modes, but also other communications modes, such as device-to-device (D2D) communications, machine-to-machine (M2M) communications, machine-type communications (MTC), vehicle-to-vehicle (V2V) communications, or vehicle-to-everything (V2X) communications. The embodiments of the present disclosure are also applicable to these communication systems.

The communication system in the embodiments of the present disclosure may be applicable to a carrier aggregation (CA) scenario, a dual connectivity (DC) scenario, and a standalone (SA) networking scenario.

The communication system in the embodiments of the present disclosure may be applicable to an unlicensed spectrum. The unlicensed spectrum may also be considered as a shared spectrum. Alternatively, the communication system in the embodiments of the present disclosure may be applicable to a licensed spectrum. The licensed spectrum may also be considered as an unshared spectrum or a dedicated spectrum.

The embodiments of the present disclosure may be applicable to a terrestrial network (TN) system and the NTN system.

In some embodiments of the present disclosure, a cell may be equivalent to a carrier. For example, a "downlink cell" may be equivalent to a "downlink carrier," and an "uplink cell" may be equivalent to an "uplink carrier."

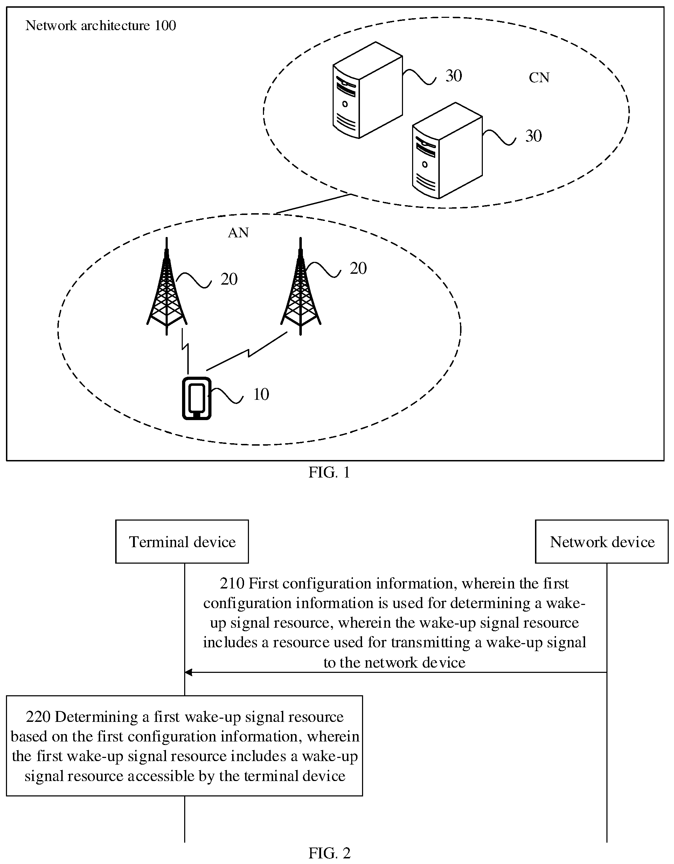

FIG. 1 is a schematic diagram of a network architecture 100 according to some embodiments of the present disclosure. The network architecture 100 may involve a terminal device 10, an access network (AN) device 20, and a core network (CN) device 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For convenience of description, the devices mentioned above are collectively referred to as the terminal device. A plurality of terminal devices 10 are usually deployed. At least one terminal device 10 may be distributed in a cell managed by each AN device 20.

The AN device 20 is a device deployed in an AN to provide a wireless communication function for the terminal device 10. The AN device 20 may include various forms of macro base stations, micro base stations, relay stations, access points, and the like. In systems employing different radio access technologies, devices with a function of the AN device may have different names, for example, gNodeB or gNB in a 5G NR system. As a communication technology evolves, the name "AN device" may change. For convenience of description, in the embodiments of the present disclosure, the above apparatuses providing the wireless communication function for the terminal device 10 are collectively referred to as the AN device. In some embodiments, a communication relationship may be established between the terminal device 10 and the CN device 30 using the AN device 20. For example, in an LTE system, the AN device 20 may be an evolved universal terrestrial radio access network (EUTRAN) or at least one eNodeB in the EUTRAN. In a 5G NR system, the AN device 20 may be a radio access network (RAN) or at least one gNB in the RAN. In the embodiments of the present disclosure, unless otherwise specified, the term "network device" is the AN device 20, such as a base station.

The CN device 30 is a device deployed in a CN. The CN device 30 mainly functions to provide a user connection, user management and service bearing, and to provide an interface to an external network as a bearer network. For example, CN devices in the 5G NR system may include devices such as an access and mobility management function (AMF) entity, a user plane function (UPF) entity, and a session management function (SMF) entity.

In some embodiments, the AN device 20 communicate with the CN device 30 using a specific air interface technology, such as an NG interface in the 5G NR system. The AN device 20 communicates with and the terminal device 10 using a specific air interface technology, such as a Uu interface.

The "5G NR system" in the embodiments of the present disclosure may also be referred to as a 5G system or an NR system, but those skilled in the art may understand its meaning. The technical solutions according to the embodiments of the present disclosure may be applicable to the LTE system, the 5G NR system, an evolved system subsequent to the 5G NR system, a narrowband Internet of things (NB-IoT) system, and other communication systems. This is not limited in the present disclosure.

In the embodiments of the present disclosure, the network device provides a service for a cell. The terminal device communicates with the network device over a transmission resource (for example, a frequency-domain resource or a spectrum resource) on a carrier used by the cell. The cell may be a cell corresponding to the network device (for example, the base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission services.

Prior to description of the technical solutions of the present disclosure, some background technical knowledge involved in the present disclosure is described. The following related arts, as optional solutions, may be arbitrarily combined with the technical solutions according to the embodiments of the present disclosure, and all fall within the protection scope of the embodiments of the present disclosure. The embodiments of the present disclosure include at least part of the following content.

### 1. Background of network energy saving

The network energy saving is of great significance to environmental sustainability, environmental impact reduction (greenhouse gas emission reduction), and operational expenditure saving. With gradual popularization of 5G in various industrial and geographical regions, a very high data transmission rate needs to be supported to handle a more advanced service and application (such as Extended Reality (XR)). As a result, network deployments become denser, and consequently more antennas, larger bandwidths, and more frequency bands are used. Considering the impacts of the 5G on environment, it is necessary to develop a controlled and new solution to enhance the network energy saving.

For operators, energy consumption contributes to a significant portion of an operational expenditure (OPEX). As indicated by a report by the Global System for Mobile Communications Association (GSMA), energy cost of a mobile network accounts for approximately 23% of a total OPEX. Most of the energy consumption comes from a RAN, and more specifically, from an active antenna unit (AAU). Only a small portion of the energy consumption comes from a data center and fiber optic transmission. Power consumption of one radio access may be divided into two parts: a dynamic part and a static part. The dynamic part only includes power consumption in the case that data is being transmitted or received, and the static part includes power consumption for maintaining necessary operation of a radio access device at all times, including power consumption in the case that no data is being transmitted or received.

Therefore, it is necessary to research and develop a network energy consumption model, a key performance indicator (KPI), an evaluation method, and the like on a network device side to determine and study a network energy-saving technology in a target deployment scenario. A defined power consumption model on a terminal device side may serve as reference. This research should focus on how to achieve more effective dynamic operation and/or semi-static operation, as well as consider at least one network energy-saving technology applicable to a time domain, a frequency domain, a spatial domain, and a power domain, and combine potential terminal device feedback support, potential terminal device auxiliary information, and a technology for information exchange or coordination between network interfaces to achieve finer-grained data transmission and/or reception adaptation.

It is worth noting that this research not only evaluates a potential network energy-saving gain, but also needs to evaluate and balance an impact on network and user performance by observing KPIs such as spectrum efficiency, capability, user perceived throughput (UPT), delay, UE power consumption, complexity, handover performance, call drop rate, initial access performance, and KPI related to SLA security. This research should avoid exerting a significant impact on the above KPIs.

### 2. Network energy-saving technology

In a network energy-saving system, in order to save energy, a network device enters a sleep mode state (or an energy-saving mode) in the case that service load is relatively light or no service load is present. Table 1 schematically shows an energy consumption model for the network device.

**Table 1 Reference energy consumption model for the network device**

| Sleep mode state | Feature | Relative power | Extra transitional energy consumption | Total transition time |
|---|---|---|---|---|
| Deep sleep | No downlink transmission or uplink reception. | P1=1 | E1 | T1 |
| | Sleep time should be greater than total transition time for entering or leaving the deep sleep state. | | | |
| Shallow sleep | No downlink transmission or uplink reception. | P2 | E2 | T2 |
| | The sleep time should be greater than total transition time for entering or leaving the shallow sleep state. | | | |
| | P2>P1 | | | |
| Micro sleep | No downlink transmission or uplink reception. | P3 | 0 | 0 |
| | It is assumed that total transition time for entering or leaving the micro sleep state is 0. | | | |
| Downlink activated | Only downlink transmission. | P4 | NA | NA |
| Uplink activated | Only uplink reception. | P5 | NA | NA |

However, when the network device enters the sleep mode state, in the case that a service or traffic arrives at the terminal device, the terminal device fails to communicate with the network device in a timely manner. As a result, the service or traffic of the terminal device fails to be transmitted for a long time. To solve this problem, in a possible implementation, the network device configures a gNB-WUS resource for the terminal device. Even though the network device enters or is in the sleep mode state, the network device may also detect whether the terminal device has transmitted a wake-up request on this resource. In the case that the service or traffic arrives at the terminal device, the terminal device may transmit the wake-up request to the network device over the gNB-WUS resource, such that the network device knows a transmission requirement of the terminal device.

In the present disclosure, the "sleep mode" is also referred to as an "energy-saving mode,", an "energy-saving state," a "sleep state," a "sleep mode state," a "sleep energy-saving mode," a "sleep energy-saving state," or the like. However, those skilled in the art understand the actual meaning.

FIG. 2 is a flowchart of a method for wireless communication according to some embodiments of the present disclosure. The method may be applicable to the network architecture shown in FIG. 1. The method may include at least one of the following processes.

In process 210, a network device transmits first configuration information to a terminal device, wherein the first configuration information is used for determining a wake-up signal resource, wherein the wake-up signal resource includes a resource used for transmitting a wake-up signal to the network device.

Correspondingly, the terminal device receives the first configuration information.

In some embodiments, the wake-up signal is a signal used for waking up the network device. A network device for which a sleep mode may be configured is capable of configuring the wake-up signal resource for the terminal device. The terminal device may transmit the wake-up signal to the network device over the wake-up signal resource. Upon reception of the wake-up signal, the network device may know a transmission requirement of the terminal device. The wake-up signal may be referred to as a network device wake-up signal, a base station wake-up signal, or a next generation node B wake-up signal (gNB-WUS). The wake-up signal resource may be referred to as a network device wake-up signal resource, a base station wake-up signal resource, or a gNB-WUS resource.

In process 220, the terminal device determines a first wake-up signal resource based on the first configuration information, wherein first wake-up signal resource includes a wake-up signal resource accessible by the terminal device.

Based on the first configuration information, the terminal device determines the wake-up signal resource accessible by the terminal device. In the embodiments of the present disclosure, the wake-up signal resource that is determined by the terminal device based on the first configuration information and may be used by the terminal device is referred to as the first wake-up signal resource.

In some embodiments, the terminal device transmits the wake-up signal to the network device over the first wake-up signal resource. For example, in the case that the terminal device needs to wake up the network device, that is, performing uplink transmission or synchronization, the terminal device may transmit the wake-up signal to the network device over the first wake-up signal resource.

In some embodiments, that the first configuration information is used for determining the wake-up signal resource includes the following scenarios: the first configuration information is used for determining at least one group of wake-up signal resources, wherein the at least one group of wake-up signal resources includes the first wake-up signal resource. In some embodiments, the first wake-up signal resource includes some or all wake-up signal resources in the at least one group of wake-up signal resources.

In some embodiments, the process that the terminal device determines the first wake-up signal resource based on the first configuration information includes: determining the at least one group of wake-up signal resources based on the first configuration information; and determining the first wake-up signal resource based on the at least one group of wake-up signal resources, wherein the first wake-up signal resource includes the some or all wake-up signal resources in the at least one group of wake-up signal resources.

In some embodiments, one group of wake-up signal resources corresponds to at least one wake-up signal resource configuration.

It should be understood that, in the embodiments of the present disclosure, the wake-up signal resources are different in at least one of the following aspects:
time-domain positions the wake-up signal resources are different;
frequency-domain positions the wake-up signal resources are different; or
the wake-up signal resources are associated with different sequences.

In the embodiments of the present disclosure, the terminal device is capable of acquiring the wake-up signal resource that is configured by the network device for the terminal device, and then determining, based on its own requirement, the first wake-up signal resource that may be used. In the case that the network device is in the sleep mode, the terminal device may transmit the wake-up signal to the network device over the first wake-up signal resource, and the network device is woken up to provide a service for the terminal device. In this way, the problem that a communication transmission delay of the terminal device is too long because the network device in the sleep mode is incapable of serving the terminal device for a long time is addressed, such that the performance of data transmission between the terminal device and the network device is improved.

In some embodiments, the first configuration information is carried over at least one of: a system message, radio resource control (RRC) signaling, a medium access control (MAC) control element (CE), or downlink control information (DCI).

In some embodiments, in the case that the terminal device is in an idle or inactive state, the first configuration information is carried over the system message.

In some embodiments, in the case that the terminal device is in a connected state, the first configuration information is carried over at least one of the RRC signaling, the MAC CE, or the DCI. In some embodiments, the first configuration information is carried over the RRC signaling; the first configuration information is carried over the RRC signaling and the DCI; the first configuration information is carried over the MAC CE; or the first configuration information is carried over the RRC signaling and the MAC CE.

In some embodiments, the first configuration information is carried over the RRC signaling, and the RRC signaling is used for indicating the at least one group of wake-up signal resources. The first configuration information is used for determining the wake-up signal resource, wherein the wake-up signal resource includes the at least one group of wake-up signal resources. Upon reception of the RRC signaling carrying the first configuration information, the terminal device is capable of determining the at least one group of wake-up signal resources based on the first configuration information carried in the RRC signaling. Subsequently, the terminal device is capable of determining the first wake-up signal resource based on the at least one group of wake-up signal resources. The first wake-up signal resource includes the some or all wake-up signal resources in the at least one group of wake-up signal resources.

In some embodiments, the first configuration information is carried over the RRC signaling and the DCI, the RRC signaling is used for indicating the at least one group of wake-up signal resources, and the DCI is used for indicating activation or deactivation of one or more groups of wake-up signal resources in the at least one group of wake-up signal resources. The first configuration information is used for determining the wake-up signal resource, wherein the wake-up signal resource includes one or more groups of activated wake-up signal resources in the at least one group of wake-up signal resources. Upon reception of the RRC signaling carrying the first configuration information, the terminal device is capable of determining the at least one group of wake-up signal resources based on the first configuration information carried in the RRC signaling. Furthermore, upon reception of the DCI carrying the first configuration information, the terminal device is capable of determining the one or more groups of activated wake-up signal resources in the at least one group of wake-up signal resources based on the first configuration information carried in the DCI. Subsequently, the terminal device is capable of determining the first wake-up signal resource based on the one or more groups of activated wake-up signal resources. The first wake-up signal resource includes some or all wake-up signal resources in the one or more groups of activated wake-up signal resources.

In some embodiments, the first configuration information is carried over the MAC CE, and the MAC CE is used for indicating the at least one group of wake-up signal resources. The first configuration information is used for determining the wake-up signal resource, wherein the wake-up signal resource includes the at least one group of wake-up signal resources. Upon reception of the MAC CE carrying the first configuration information, the terminal device is capable of determining the at least one group of wake-up signal resources based on the first configuration information carried in the MAC CE. Subsequently, the terminal device is capable of determining the first wake-up signal resource based on the at least one group of wake-up signal resources. The first wake-up signal resource includes the some or all wake-up signal resources in the at least one group of wake-up signal resources. In some embodiments, the first wake-up signal resource includes a wake-up signal resource after a time point at which the MAC CE takes effect.

In some embodiments, the first configuration information is carried over the RRC signaling and the MAC CE, the RRC signaling is used for indicating the at least one group of wake-up signal resources, and the MAC CE is used for indicating activation or deactivation of one or more groups of wake-up signal resources in the at least one group of wake-up signal resources. The first configuration information is used for determining the wake-up signal resource, wherein the wake-up signal resource includes one or more groups of activated wake-up signal resources in the at least one group of wake-up signal resources. Upon reception of the RRC signaling carrying the first configuration information, the terminal device is capable of determining the at least one group of wake-up signal resources based on the first configuration information carried in the RRC signaling. Furthermore, upon reception of the MAC CE carrying the first configuration information, the terminal device is capable of determining the one or more groups of activated wake-up signal resources in the at least one group of wake-up signal resources based on the first configuration information carried in the MAC CE. Subsequently, the terminal device is capable of determining the first wake-up signal resource based on the one or more groups of activated wake-up signal resources. The first wake-up signal resource includes some or all wake-up signal resources in the one or more groups of activated wake-up signal resources. In some embodiments, the first wake-up signal resource includes a wake-up signal resource after a time point at which the MAC CE takes effect.

In some embodiments, the at least one group of wake-up signal resources includes a plurality of groups of wake-up signal resources, and different groups of wake-up signal resources have at least one of the following characteristics:
(1) At least one wake-up signal resource in the different groups of wake-up signal resources is different.
   For example, the different groups of wake-up signal resources include different wake-up signal resources.
(2) The different groups of wake-up signal resources correspond to different priorities.

For example, the plurality of groups of wake-up signal resources include a first group of wake-up signal resources and a second group of wake-up signal resources. The first group of wake-up signal resources corresponds to a first priority, the second group of wake-up signal resources corresponds to a second priority, and the first priority is higher than the second priority. The terminal device may select a corresponding group of wake-up signal resources based on the different priorities to transmit the wake-up signal to the network device.

In some embodiments, the priority is associated with at least one of a request channel, a purpose, or a service type. The terminal device is capable of determining an associated priority based on the at least one of the request channel, the purpose, or the service type, and then selecting a group of wake-up signal resources corresponding to the priority to transmit the wake-up signal to the network device.

(3) The different groups of wake-up signal resources correspond to different request channels.

(4) The different groups of wake-up signal resources correspond to different purposes.

(5) The different groups of wake-up signal resources correspond to different service types.

In some embodiments, the plurality of groups of wake-up signal resources include the first group of wake-up signal resources and the second group of wake-up signal resources. The first group of wake-up signal resources corresponds to requested uplink channel or signal transmission, and the second group of wake-up signal resources corresponds to requested downlink channel or signal transmission. The terminal device may select a corresponding group of wake-up signal resources based on the different channel requests, purposes, or service types to transmit the wake-up signal to the network device.

In some embodiments, in the case that the terminal device has a to-be-transmitted uplink service, the terminal device selects a resource from the first group of wake-up signal resources corresponding to the requested uplink channel or signal transmission to transmit the wake-up signal to the network device. Correspondingly, upon reception of the wake-up signal based on the first group of wake-up signal resources, the network device may know that the terminal device has a requirement for the uplink transmission, and thus allocates an uplink resource for the uplink channel or signal transmission to the terminal device.

In some embodiments, in the case that the terminal device has a requirement for the synchronization, the terminal device selects a resource from the second group of wake-up signal resources corresponding to the requested downlink channel or signal transmission to transmit the wake-up signal to the network device. Correspondingly, upon reception of the wake-up signal based on the second group of wake-up signal resources, the network device may know that the terminal device has the requirement for the synchronization, and thus transmits a downlink channel or signal for the synchronization to the terminal device, for example, transmits a synchronization signal and physical broadcast channel (PBCH) block (SSB) or a channel state information reference signal (CSI-RS) to the terminal device.

In some embodiments, the different priorities are associated with the different request channels; the different priorities are associated with the different purposes; or the different priorities are associated with the different service types.

In some embodiments, the plurality of groups of wake-up signal resources include the first group of wake-up signal resources and the second group of wake-up signal resources. The first group of wake-up signal resources corresponds to the requested uplink channel or signal transmission, and the first group of wake-up signal resources is associated with the first priority. The second group of wake-up signal resources corresponds to the requested downlink channel or signal transmission, and the second group of wake-up signal resources is associated with the second priority. In some embodiments, the first priority is higher than the second priority; or the first priority is lower than the second priority.

In some embodiments, in the case that the terminal device has the requirement for the synchronization, the terminal device selects the resource from the second group of wake-up signal resources corresponding to the requested downlink channel or signal transmission to transmit the wake-up signal to the network device. In the case that the terminal device has the to-be-transmitted uplink service, the terminal device selects the resource from the first group of wake-up signal resources corresponding to the requested uplink channel or signal transmission to transmit the wake-up signal to the network device. In the case that the terminal device is not synchronized, the terminal device fails to transmit the uplink service to the network device. Therefore, it can be assumed that a priority of the synchronization is higher than that of the uplink service transmission, or, the second priority associated with the second group of wake-up signal resources is higher than the first priority associated with the first group of wake-up signal resources.

(6) The different groups of wake-up signal resources are associated with different terminal devices.

In some embodiments, the plurality of groups of wake-up signal resources include wake-up signal resources of a plurality of terminal devices, and different terminal devices determine their own accessible wake-up signal resources from the plurality of groups of wake-up signal resources based on configuration information of the network device.

In a specific example, the terminal device determines the at least one group of wake-up signal resources based on the first configuration information.

The terminal device determines the first wake-up signal resource based on the at least one group of wake-up signal resources, wherein the first wake-up signal resource includes a wake-up signal resource associated with the terminal device in the at least one group of wake-up signal resources.

In some embodiments, the network device configures N terminal devices as a group, wherein N is a positive integer. Each terminal device corresponds to an identifier m in the terminal device group, wherein a value of m is 0, 1, ..., and N-1. The network device transmits the first configuration information to the terminal device group. The first configuration information is used for determining N groups of wake-up signal resources, and each group of wake-up signal resources is associated with one terminal device, or an m^{th} group of wake-up signal resources is associated with a terminal device whose identifier is m. Upon reception of the first configuration information, the terminal device whose identifier is m is capable of determining the N groups of wake-up signal resources and determine the m^{th} group of wake-up signal resources in the N groups of wake-up signal resources as its associated wake-up signal resource based on the identifier m of the terminal device.

In this way, the different groups of wake-up signal resources are associated with at least one of the different priorities, the different request channels, the different purposes, the different service types, or the different terminal devices. In this way, the terminal device is capable of determining an accessible wake-up signal resource based on different requirements, and transmitting the wake-up signal to the network device over the corresponding wake-up signal resource. This enables the network device to preliminarily determine the transmission requirement of the terminal device or identify a terminal device with a service request, such that transmission efficiency of the system is improved.

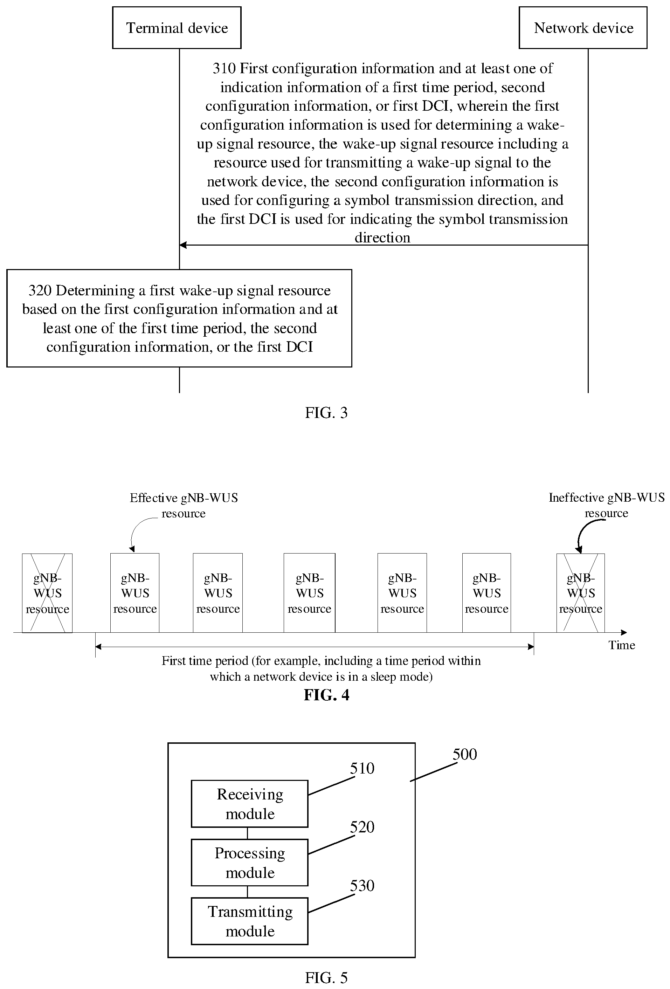

In some embodiments, as shown in FIG. 3, the method may include at least one of the following processes:

In process 310, the network device transmits the first configuration information and at least one of indication information of a first time period, second configuration information, or first DCI to the terminal device, wherein the first configuration information is used for determining a wake-up signal resource, the wake-up signal resource including the resource used for transmitting the wake-up signal to the network device, the second configuration information is used for configuring a symbol transmission direction, and the first DCI is used for indicating the symbol transmission direction.

Correspondingly, the terminal device receives the first configuration information and the at least one of the indication information of the first time period, the second configuration information, or the first DCI.

The at least one of the indication information of the first time period, the second configuration information, or the first DCI may be transmitted together with the first configuration information or separately, which is not limited in the present disclosure. In addition, during the process that the network device transmits at least two pieces of the first configuration information, the indication information of the first time period, the second configuration information, or the first DCI to the terminal device, each piece of information may be sent together or separately. During the process that the pieces of information are transmitted separately, a transmit order is not limited in the present disclosure.

In process 320, the terminal device determines the first wake-up signal resource based on the first configuration information and at least one of the first time period, the second configuration information, or the first DCI.

In some embodiments, the first time period is determined based on a configuration or the configuration information of the network device.

In some embodiments, the first configuration information is used for determining the at least one group of wake-up signal resources, and the at least one group of wake-up signal resources includes an effective wake-up signal resource and/or an ineffective wake-up signal resource. The first wake-up signal resource includes at least one effective wake-up signal resource in the at least one group of wake-up signal resources. In some embodiments, the first wake-up signal resource includes the effective wake-up signal resources in the at least one group of wake-up signal resources.

In some embodiments, in the case that the at least one group of wake-up signal resources only includes the ineffective wake-up signal resource, the process that the terminal device determines the first wake-up signal resource based on the at least one group of wake-up signal resources includes: determining no accessible wake-up signal resource.

In some embodiments, the terminal device determines the at least one group of wake-up signal resources based on the first configuration information, and determines the first wake-up signal resource based on the at least one group one of wake-up signal resources and the at least one of the first time period, the second configuration information, or the first DCI. The first wake-up signal resource includes the effective wake-up signal resource. In some embodiments, the terminal device determines the effective wake-up signal resource based on the at least one of the first time period, the second configuration information, or the first DCI. The terminal device determines the first wake-up signal resource based on the at least one group of wake-up signal resources and the effective wake-up signal resource. For example, the terminal device determines the at least one effective wake-up signal resource in the at least one group of wake-up signal resources as the first wake-up signal resource. For example, the terminal device determines the effective wake-up signal resources in the at least one group of wake-up signal resources as the first wake-up signal resource.

In some embodiments, the effective wake-up signal resource and/or the ineffective wake-up signal resource are/is determined based on the first time period. The effective wake-up signal resource includes a wake-up signal resource within the first time period; and/or the ineffective wake-up signal resource includes a wake-up signal resource not within the first time period.

In some embodiments, the first time period is related to the sleep mode of the network device, and the first time period includes: a time period within which the network device is in the sleep mode; and/or a time period corresponding to a transition time for the network device to be in the sleep mode.

In some embodiments, the time period within which the network device is in the sleep mode includes a corresponding sleep time period after the network device enters the sleep mode. In some embodiments, the time period within which the network device is in the sleep mode includes a time period corresponding to a transition time for the network device to enter the sleep mode, a time period corresponding to a transition time for the network device to exit the sleep mode, and the corresponding sleep time period after the network device enters the sleep mode.

In some embodiments, the time period corresponding to the transition time for the network device to be in the sleep mode includes the time period corresponding to the transition time for the network device to enter the sleep mode, and/or the time period corresponding to the transition time for the network device to exit the sleep mode.

For example, as shown in FIG. 4, the first time period includes the time period within which the network device is in the sleep mode. An effective gNB-WUS resource includes a gNB-WUS resource within the first time period; and/or an ineffective gNB-WUS resource includes a gNB-WUS resource not within the first time period.

In some embodiments, the effective wake-up signal resource and/or the ineffective wake-up signal resource are/is determined based on the second configuration information. In some embodiments, the second configuration information is used for configuring a time division duplexing (TDD) configuration pattern.

In an example, a symbol transmission direction corresponding to the effective wake-up signal resource is configured as an uplink symbol or a flexible symbol by the second configuration information; and/or a transmission direction of at least one symbol corresponding to the ineffective wake-up signal resource is configured as a downlink symbol by the second configuration information.

In another example, a symbol transmission direction corresponding to the effective wake-up signal resource is configured as an uplink symbol by the second configuration information; and/or a transmission direction of at least one symbol corresponding to the ineffective wake-up signal resource is configured as a downlink symbol or a flexible symbol by the second configuration information.

In some embodiments, the effective wake-up signal resource and/or the ineffective wake-up signal resource are/is determined based on the first DCI. In some embodiments, a DCI format corresponding to the first DCI includes a DCI format 2_0. In some embodiments, the first DCI is used for indicating a timeslot structure, or the first DCI is used for indicating a transmission direction of a symbol in at least one timeslot.

In an example, the symbol transmission direction corresponding to the effective wake-up signal resource is indicated as the uplink symbol by the first DCI; and/or the transmission direction of the at least one symbol corresponding to the ineffective wake-up signal resource is indicated as the downlink symbol or the flexible symbol by the first DCI.

In another example, the symbol transmission direction corresponding to the effective wake-up signal resource is indicated as the uplink symbol or the flexible symbol by the first DCI; and/or the transmission direction of the at least one symbol corresponding to the ineffective wake-up signal resource is indicated as the downlink symbol by the first DCI.

In the above manner, based on the at least one of the first time period, the second configuration information, or the first DCI, the terminal device selects, as the first wake-up signal resource, an effective wake-up signal resource associated with the terminal device from the at least one group of wake-up signal resources configured based on the first configuration information. Subsequently, by transmitting the wake-up signal to the network device over the first wake-up signal resource, a wake-up success rate may be improved.

Through several embodiments, the following describes several possible implementations in which the terminal device determines the first wake-up signal resource.

### Possible implementation 1:

In some embodiments, the process that the terminal device determines the first wake-up signal resource based on the first configuration information includes: determining the first wake-up signal resource based on the first configuration information and the first time period.

In some embodiments, the first time period includes the time period within which the network device is in the sleep mode.

In some embodiments, the first time period includes the time period corresponding to the transition time for the network device to be in the sleep mode. For example, the first time period includes the time period corresponding to the transition time for the network device to enter the sleep mode, and/or the time period corresponding to the transition time for the network device to exit the sleep mode.

In some embodiments, the process that the terminal device determines the first wake-up signal resource based on the first configuration information and the first time period includes:
determining the at least one group of wake-up signal resources based on the first configuration information; and
determining that the first wake-up signal resource includes a wake-up signal resource within the first time period in the at least one group of wake-up signal resources; or
determining that the first wake-up signal resource includes a wake-up signal resource that is associated with the terminal device and located within the first time period in the at least one group of wake-up signal resources.

In some embodiments, a start position and/or a length of the first time period are/is determined based on third configuration information of the network device. In some embodiments, the method further includes: determining the first time period based on the third configuration information.

### Possible implementation 2:

In some embodiments, that the terminal device determines the first wake-up signal resource based on the first configuration information includes: determining the first wake-up signal resource based on the first configuration information and the second configuration information.

In some embodiments, the second configuration information is used for configuring the TDD configuration pattern.

In some embodiments, the second configuration information is used for configuring the symbol transmission direction as the downlink symbol, the uplink symbol, or the flexible symbol.

In some embodiments, the process that that the terminal device determines the first wake-up signal resource based on the first configuration information and the second configuration information includes:
determining the at least one group of wake-up signal resources based on the first configuration information; and
determining that the first wake-up signal resource includes a wake-up signal resource with a corresponding symbol transmission direction configured as the uplink symbol by the second configuration information in the at least one group of wake-up signal resources; or
determining that the first wake-up signal resource includes a wake-up signal resource associated with the terminal device and with a corresponding symbol transmission direction configured as the uplink symbol by the second configuration information in the at least one group of wake-up signal resources; or
determining that the first wake-up signal resource includes a wake-up signal resource with a corresponding symbol transmission direction configured as the uplink symbol or the flexible symbol by the second configuration information in the at least one group of wake-up signal resources; or
determining that the first wake-up signal resource includes a wake-up signal resource associated with the terminal device and with a corresponding symbol transmission direction configured as the uplink symbol or the flexible symbol by the second configuration information in the at least one group of wake-up signal resources.

### Possible implementation 3:

In some embodiments, the process that the terminal device determines the first wake-up signal resource based on the first configuration information includes: determining the first wake-up signal resource based on the first configuration information and the first DCI.

In some embodiments, the first DCI is used for indicating the timeslot structure, or, the first DCI is used for indicating the transmission direction of the symbol in the at least one timeslot. The symbol transmission direction may be the downlink symbol, the uplink symbol, or the flexible symbol.

In some embodiments, the DCI format corresponding to the first DCI includes the DCI format 2_0.

In some embodiments, the process that the terminal device determines the first wake-up signal resource based on the first configuration information and the first DCI includes:
determining the at least one group of wake-up signal resources based on the first configuration information; and
determining that the first wake-up signal resource includes a wake-up signal resource with a corresponding symbol transmission direction indicated as the uplink symbol by the first DCI in the at least one group of wake-up signal resources; or
determining that the first wake-up signal resource includes a wake-up signal resource associated with the terminal device and with a corresponding symbol transmission direction indicated as the uplink symbol by the first DCI in the at least one group of wake-up signal resources; or
determining that the first wake-up signal resource includes a wake-up signal resource with a corresponding symbol transmission direction indicated as the uplink symbol or the flexible symbol by the first DCI in the at least one group of wake-up signal resources; or
determining that the first wake-up signal resource includes a wake-up signal resource associated with the terminal device and with a corresponding symbol transmission direction indicated as the uplink symbol or the flexible symbol by the first DCI in the at least one group of wake-up signal resources.

### Possible implementation 4:

In some embodiments, the process that the terminal device determines the first wake-up signal resource based on the first configuration information includes: determining the first wake-up signal resource based on the first configuration information, the first time period, and the second configuration information.

In some embodiments, the process that the terminal device determines the first wake-up signal resource based on the first configuration information, the first time period, and the second configuration information includes:
determining the at least one group of wake-up signal resources based on the first configuration information; and
determining that the first wake-up signal resource includes: a wake-up signal resource within the first time period and with a corresponding symbol transmission direction configured as the uplink symbol by the second configuration information in the at least one group of wake-up signal resources; or a wake-up signal resource associated with the terminal device, and within the first time period and with a corresponding symbol transmission direction configured as the uplink symbol by the second configuration information in the at least one group of wake-up signal resources; or a wake-up signal resource within the first time period and with a corresponding symbol transmission direction configured as the uplink symbol or the flexible symbol by the second configuration information in the at least one group of wake-up signal resources; or a wake-up signal resource associated with the terminal device, and within the first time period and with a corresponding symbol transmission direction configured as the uplink symbol or the flexible symbol by the second configuration information in the at least one group of wake-up signal resources.

### Possible implementation 5:

In some embodiments, the process that the terminal device determines the first wake-up signal resource based on the first configuration information includes: determining the first wake-up signal resource based on the first configuration information, the first time period, and the first DCI.

In some embodiments, the process that the terminal device determines the first wake-up signal resource based on the first configuration information, the first time period, and the first DCI includes:
determining the at least one group of wake-up signal resources based on the first configuration information; and
determining that the first wake-up signal resource includes: a wake-up signal resource within the first time period and with a corresponding symbol transmission direction indicated as the uplink symbol by the first DCI in the at least one group of wake-up signal resources; or a wake-up signal resource associated with the terminal device, and within the first time period and with a corresponding symbol transmission direction indicated as the uplink symbol by the first DCI in the at least one group of wake-up signal resources; or a wake-up signal resource within the first time period and with a corresponding symbol transmission direction indicated as the uplink symbol or the flexible symbol by the first DCI in the at least one group of wake-up signal resources; or a wake-up signal resource associated with the terminal device, and within the first time period and with a corresponding symbol transmission direction indicated as the uplink symbol or the flexible symbol by the first DCI in the at least one group of wake-up signal resources.

### Possible implementation 6:

In some embodiments, the process that the terminal device determines the first wake-up signal resource based on the first configuration information includes: determining the first wake-up signal resource based on the first configuration information, the first time period, the second configuration information, and the first DCI.

In some embodiments, the process that the terminal device determines the first wake-up signal resource based on the first configuration information, the first time period, the second configuration information, and the first DCI includes:
determining the at least one group of wake-up signal resources based on the first configuration information; and
determining that the first wake-up signal resource includes: a wake-up signal resource within the first time period, and with a corresponding symbol transmission direction configured as the uplink symbol or the flexible symbol by the second configuration information and the corresponding symbol transmission direction indicated as the uplink symbol by the first DCI in the at least one group of wake-up signal resources; or a wake-up signal resource associated with the terminal device, and within the first time period, with a corresponding symbol transmission configured as the uplink symbol or the flexible symbol by the second configuration information and the corresponding symbol transmission direction indicated as the uplink symbol by the first DCI in the at least one group of wake-up signal resources.

It should be noted that the above processes performed by the terminal device may be separately implemented as the method for wireless communication on the terminal device side, and the above processes performed by the network device may be separately implemented as the method for wireless communication on the network device side.

The following are apparatus embodiments of the present disclosure, and the apparatus illustrated in the embodiments may be used to perform the method embodiments of the present disclosure. For details not disclosed in the apparatus embodiments of the present disclosure, reference may be made to the method embodiments of the present disclosure.

FIG. 5 is a block diagram of an apparatus for wireless communication according to some embodiments of the present disclosure. The apparatus has functions for implementing the method examples on the terminal device side. The function may be implemented by hardware or by hardware executing corresponding software. The apparatus may be the terminal device described above or may be provided in the terminal device. As shown in FIG. 5, the apparatus 500 may include a receiving module 510 and a processing module 520.

The receiving module 510 is configured to receive first configuration information. The first configuration information is used for determining a wake-up signal resource, wherein the wake-up signal resource includes a resource used for transmitting a wake-up signal to a network device.

The processing module 520 is configured to determine a first wake-up signal resource based on the first configuration information. The first wake-up signal resource includes a wake-up signal resource accessible by the terminal device.

In some embodiments, the processing module 520 is configured to determine the first wake-up signal resource based on the first configuration information and at least one of a first time period, second configuration information, or first DCI. The first time period is determined based on a configuration or configuration information of the network device, the second configuration information is used for configuring a symbol transmission direction, and the first DCI is used for indicating the symbol transmission direction.

In some embodiments, the processing module 520 is configured to determine at least one group of wake-up signal resources based on the first configuration information, and determine the first wake-up signal resource based on the at least one group of wake-up signal resources, wherein the first wake-up signal resource includes some or all wake-up signal resources in the at least one group of wake-up signal resources.

In some embodiments, the at least one group of wake-up signal resources includes an effective wake-up signal resource and/or an ineffective wake-up signal resource, and the processing module 520 is configured to determine the first wake-up signal resource based on the at least one group of wake-up signal resources and the at least one of the first time period, the second configuration information, or the first DCI, wherein the first wake-up signal resource comprises the effective wake-up signal resource.

In some embodiments, the effective wake-up signal resource includes a wake-up signal resource within the first time period; and/or the ineffective wake-up signal resource includes a wake-up signal resource not within the first time period.

In some embodiments, a symbol transmission direction corresponding to the effective wake-up signal resource is configured as an uplink symbol or a flexible symbol by the second configuration information; and/or a transmission direction of at least one symbol corresponding to the ineffective wake-up signal resource is configured as a downlink symbol by the second configuration information.

In some embodiments, the symbol transmission direction corresponding to the effective wake-up signal resource is configured as the uplink symbol by the second configuration information; and/or the transmission direction of the at least one symbol corresponding to the ineffective wake-up signal resource is configured as the downlink symbol or the flexible symbol by the second configuration information.

In some embodiments, the symbol transmission direction corresponding to the effective wake-up signal resource is indicated as the uplink symbol by the first DCI; and/or the transmission direction of the at least one symbol corresponding to the ineffective wake-up signal resource is indicated as the downlink symbol or the flexible symbol by the first DCI.

In some embodiments, the symbol transmission direction corresponding to the effective wake-up signal resource is indicated as the uplink symbol or the flexible symbol by the first DCI; and/or the transmission direction of the at least one symbol corresponding to the ineffective wake-up signal resource is indicated as the downlink symbol by the first DCI.

In some embodiments, different groups of wake-up signal resources have at least one of the following characteristics:
at least one wake-up signal resource in the different groups of wake-up signal resources is different;
the different groups of wake-up signal resources correspond to different priorities;
the different groups of wake-up signal resources correspond to different request channels;
the different groups of wake-up signal resources correspond to different purposes;
the different groups of wake-up signal resources correspond to different service types; and
the different groups of wake-up signal resources are associated with different terminal devices.

In some embodiments, the priority is associated with at least one of the request channel, the purpose, or the service type.

In some embodiments, the first time period is related to a sleep mode of the network device, and the first time period includes: a time period within which the network device is in the sleep mode; and/or a time period corresponding to a transition time for the network device to be in the sleep mode.

In some embodiments, the first configuration information is carried over at least one of the: a system message, RRC signaling, a MAC CE, or DCI.

In some embodiments, the first configuration information is carried over the RRC signaling, and the RRC signaling is used for indicating the at least one group of wake-up signal resources. The first configuration information is used for determining the wake-up signal resource, wherein the wake-up signal resource includes the at least one group of wake-up signal resources.

In some embodiments, the first configuration information is carried over the RRC signaling and the DCI, the RRC signaling is used for indicating the at least one group of wake-up signal resources, and the DCI is used for indicating activation or deactivation of one or more groups of wake-up signal resources in the at least one group of wake-up signal resources. The first configuration information is used for determining the wake-up signal resource, wherein the wake-up signal resource includes one or more groups of activated wake-up signal resources in the at least one group of wake-up signal resources.

In some embodiments, the first configuration information is carried over the MAC CE, and the MAC CE is used for indicating the at least one group of wake-up signal resources. The first configuration information is used for determining the wake-up signal resource, wherein the wake-up signal resource includes the at least one group of wake-up signal resources.

In some embodiments, the first configuration information is carried over the RRC signaling and the MAC CE, the RRC signaling is used for indicating the at least one group of wake-up signal resources, and the MAC CE is used for indicating activation or deactivation of one or more groups of wake-up signal resources in the at least one group of wake-up signal resources. The first configuration information is used for determining the wake-up signal resource, wherein the wake-up signal resource includes one or more groups of activated wake-up signal resources in the at least one group of wake-up signal resources.

In some embodiments, the wake-up signal resources are different in at least one of: time-domain positions of the wake-up signal resources being different; frequency-domain positions of the wake-up signal resources being different; or the wake-up signal resources being associated with different sequences.

In some embodiments, as shown in FIG. 5, the apparatus 500 further includes: a transmitting module 530, configured to transmit the wake-up signal to the network device over the first wake-up signal resource.

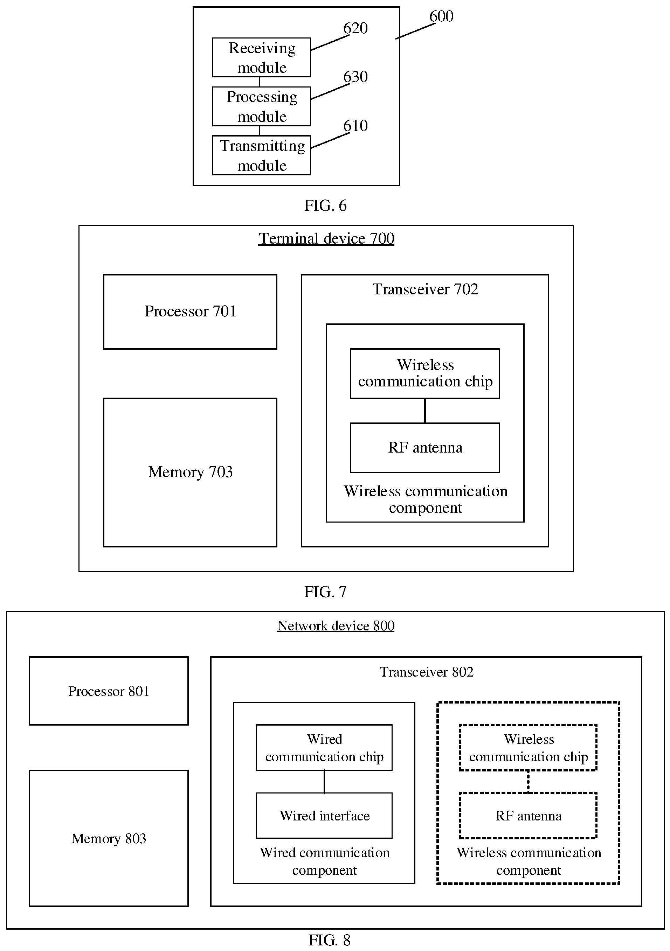

FIG. 6 is a block diagram of an apparatus for wireless communication according to some other embodiments of the present disclosure. The apparatus has functions for implementing the method examples on the network device side. The function may be implemented by hardware or by hardware executing corresponding software. The apparatus may be the network device described above or may be provided in the network device. As shown in FIG. 6, the apparatus 600 may include a transmitting module 610.

The transmitting module 610 is configured to transmit first configuration information to a terminal device. The first configuration information is used for determining a first wake-up signal resource. The first wake-up signal resource includes a wake-up signal resource accessible by the terminal device, wherein the wake-up signal resource includes a resource used for transmitting a wake-up signal to the network device.

In some embodiments, the transmitting module 610 is further configured to transmit at least one of indication information of a first time period, second configuration information, or first DCI to the terminal device. The second configuration information is used for configuring a symbol transmission direction, the first DCI is used for indicating the symbol transmission direction, and the first wake-up signal resource is determined based on the first configuration information and at least one of the first time period, the second configuration information, or the first DCI.

In some embodiments, the first configuration information is used for indicating at least one group of wake-up signal resources, and the first wake-up signal resource includes some or all wake-up signal resources in the at least one group of wake-up signal resources.

In some embodiments, the at least one group of wake-up signal resources includes an effective wake-up signal resource and/or an ineffective wake-up signal resource, and the first wake-up signal resource includes the effective wake-up signal resource.

In some embodiments, the effective wake-up signal resource includes a wake-up signal resource within the first time period; and/or the ineffective wake-up signal resource includes a wake-up signal resource not within the first time period.

In some embodiments, a symbol transmission direction corresponding to the effective wake-up signal resource is configured as an uplink symbol or a flexible symbol by the second configuration information; and/or a transmission direction of at least one symbol corresponding to the ineffective wake-up signal resource is configured as a downlink symbol by the second configuration information.

In some embodiments, the symbol transmission direction corresponding to the effective wake-up signal resource is configured as the uplink symbol by the second configuration information; and/or the transmission direction of the at least one symbol corresponding to the ineffective wake-up signal resource is configured as the downlink symbol or the flexible symbol by the second configuration information.

In some embodiments, the symbol transmission direction corresponding to the effective wake-up signal resource is indicated as the uplink symbol by the first DCI; and/or the transmission direction of the at least one symbol corresponding to the ineffective wake-up signal resource is indicated as the downlink symbol or the flexible symbol by the first DCI.

In some embodiments, the symbol transmission direction corresponding to the effective wake-up signal resource is indicated as the uplink symbol or the flexible symbol by the first DCI; and/or the transmission direction of the at least one symbol corresponding to the ineffective wake-up signal resource is indicated as the downlink symbol by the first DCI.

In some embodiments, different groups of wake-up signal resources have at least one of the following characteristics:
at least one wake-up signal resource in the different groups of wake-up signal resources is different;
the different groups of wake-up signal resources correspond to different priorities;
the different groups of wake-up signal resources correspond to different request channels;
the different groups of wake-up signal resources correspond to different purposes;
the different groups of wake-up signal resources correspond to different service types; or
the different groups of wake-up signal resources are associated with different terminal devices.

In some embodiments, the priority is associated with at least one of the request channel, the purpose, or the service type.

In some embodiments, the first time period is related to a sleep mode of the network device, and the first time period includes: a time period within which the network device is in the sleep mode; and/or a time period corresponding to a transition time for the network device to be in the sleep mode.

In some embodiments, the first configuration information is carried over at least one of: a system message, RRC signaling, a MAC CE, or DCI.

In some embodiments, the first configuration information is carried over the RRC signaling, and the RRC signaling is used for indicating the at least one group of wake-up signal resources. The first configuration information is used for determining the wake-up signal resource, wherein the wake-up signal resource includes the at least one group of wake-up signal resources.

In some embodiments, the first configuration information is carried over the RRC signaling and the DCI, the RRC signaling is used for indicating the at least one group of wake-up signal resources, and the DCI is used for indicating activation or deactivation of one or more groups of wake-up signal resources in the at least one group of wake-up signal resources. The first configuration information is used for determining the wake-up signal resource, wherein the wake-up signal resource includes one or more groups of activated wake-up signal resources in the at least one group of wake-up signal resources.

In some embodiments, the first configuration information is carried over the MAC CE, and the MAC CE is used for indicating the at least one group of wake-up signal resources. The first configuration information is used for determining the wake-up signal resource, wherein the wake-up signal resource includes the at least one group of wake-up signal resources.

In some embodiments, the first configuration information is carried over the RRC signaling and the MAC CE, the RRC signaling is used for indicating the at least one group of wake-up signal resources, and the MAC CE is used for indicating activation or deactivation of one or more groups of wake-up signal resources in the at least one group of wake-up signal resources. The first configuration information is used for determining the wake-up signal resource, wherein the wake-up signal resource includes one or more groups of activated wake-up signal resources in the at least one group of wake-up signal resources.

In some embodiments, the wake-up signal resources are different in at least one of: time-domain positions of the wake-up signal resources being different; frequency-domain positions of the wake-up signal resources being different; and the wake-up signal resources being associated with different sequences.

In some embodiments, as shown in FIG. 6, the apparatus 600 further includes: a receiving module 620, configured to receive the wake-up signal transmitted by the terminal device over the first wake-up signal resource.

**In** some embodiments, as shown in FIG. 6, the apparatus 600 further includes: a processing module 630, configured to determine at least one of the first configuration information, the first time period, the second configuration information, or the first DCI.

**In** some embodiments, as shown in FIG. 6, the apparatus 600 further includes: the processing module 630, configured to determine at least one of a corresponding priority, request channel, purpose, or service type based on the first wake-up signal resource used by the received wake-up signal.

It should be noted that when the apparatus according to the foregoing embodiments implements its functions, division of the foregoing functional modules is merely exemplary. In practice, the foregoing functions may be assigned to and implemented by different functional modules as required, that is, an internal structure of the apparatus is divided into different functional modules to implement all or some of the foregoing functions.

Regarding the apparatus according to the above embodiments, specific manners of performing operations by the modules have been described in detail in the embodiments of the related method, and details are not described herein any further.

FIG. 7 is a schematic structural diagram of a terminal device 700 according to some embodiments of the present disclosure. The terminal device 700 may be configured to perform the method processes performed by the terminal device in the above embodiments. The terminal device 700 may include a processor 701, a transceiver 702, and a memory 703.

The processor 701 includes at least one processing core. The processor 701 runs various functional applications and perform information processing by running one or more software programs and modules. The processor 701 is configured to perform other processes performed by the terminal device in the above method embodiments except for the receiving and transmitting processes.

The transceiver 702 may include a receiver and a transmitter. For example, the receiver and the transmitter may be implemented as a same wireless communication component, and the wireless communication component may include a wireless communication chip and a radio frequency (RF) antenna. The transceiver 702 is configured to perform the receiving process and/or the transmitting process performed by the terminal device in the above method embodiments.

The memory 703 may be connected to the processor 701 and the transceiver 702.

The memory 703 may be configured to store one or more computer programs run by the processor, and the processor 701 is configured to run the one or more computer programs to implement each process performed by the terminal device in the above method embodiments.

**In** addition, the memory 703 may be practiced by any type of volatile or non-volatile storage device or a combination thereof. The volatile or non-volatile storage device includes but is not limited to: a magnetic disk or an optical disc, an electrically erasable programmable read-only memory (EEPROM), an erasable programmable read-only memory (EPROM), a static random access memory (SRAM), a read-only memory (ROM), a magnetic memory, a flash memory, or a programmable read-only memory (PROM).

**In** some embodiments, the transceiver 702 is configured to receive first configuration information. The first configuration information is used for determining a wake-up signal resource, wherein the wake-up signal resource includes a resource used for transmitting a wake-up signal to a network device.

The processor 701 is configured to determine a first wake-up signal resource based on the first configuration information. The first wake-up signal resource includes a wake-up signal resource accessible by the terminal device.

For details not described in the above embodiments, reference may be made to the description in the above method embodiments, and details are not described herein any further.

FIG. 8 is a schematic structural diagram of a network device 800 according to some embodiments of the present disclosure. The network device 800 may be configured to perform the method processes performed by the network device in the above embodiments. The network device 800 may include a processor 801, a transceiver 802, and a memory 803.

The processor 801 includes at least one processing core. The processor 801 runs various functional applications and information processing by running one or more software programs and modules. The processor 801 is configured to perform other processes performed by the network device in the above method embodiments except for the receiving and transmitting processes.

The transceiver 802 may include a receiver and a transmitter. For example, the transceiver 802 may include a wired communication component, and the wired communication component may include a wired communication chip and a wired interface (for example, a fiber interface). In some embodiments, the transceiver 802 may also include a wireless communication component, and the wireless communication component may include a wireless communication chip and an RF antenna. The transceiver 802 is configured to perform the receiving process and/or the transmitting process performed by the network device in the above method embodiments.

The memory 803 may be connected to the processor 801 and the transceiver 802.

The memory 803 may be configured to store one or more computer programs run by the processor, and the processor 801 is configured to run the one or more computer programs to implement each process performed by the network device in the above method embodiments.

**In** addition, the memory 803 may be practiced by any type of volatile or non-volatile storage device or a combination thereof. The volatile or non-volatile storage device includes but is not limited to: a magnetic disk or an optical disc, an EEPROM, an EPROM, a SRAM, a ROM, a magnetic memory, a flash memory, or a PROM.

**In** some embodiments, the transceiver 802 is configured to transmit first configuration information to a terminal device. The first configuration information is used for determining a first wake-up signal resource. The first wake-up signal resource includes a wake-up signal resource accessible by the terminal device, wherein the wake-up signal resource includes a resource used for transmitting a wake-up signal to the network device.

For details not described in the embodiments, reference may be made to the description in the above embodiments, and details are not described herein any further.

Some embodiments of the present disclosure further provide a computer-readable storage medium. The storage medium stores one or more computer programs, and the computer programs, when loaded and run by a processor of a terminal device, cause the terminal device to implement the foregoing method for wireless communication on the terminal device side.

The embodiments of the present disclosure further provide a computer-readable storage medium. The storage medium stores one or more computer programs, and the computer programs, when loaded and run by a processor of a network device, cause the network device to implement the foregoing method for wireless communication on the network device side.

**In** some embodiments, the computer-readable storage medium may include a ROM, a random-access memory (RAM), a solid-state drive (SSD), an optical disc, or the like. The RAM may include a resistance random access memory (ReRAM) and a dynamic random-access memory (DRAM).

The embodiments of the present disclosure further provide a chip, including a programmable logic circuit and/or one or more program instructions. The chip, when run on a terminal device, cause the terminal device to implement the foregoing method for wireless communication on the terminal device side.

The embodiments of the present disclosure further provide a chip, including a programmable logic circuit and/or one or more program instructions. The chip, when run on a network device, cause the network device to implement the foregoing method for wireless communication on the network device side.

The embodiments of the present disclosure further provide a computer program product or a computer program. The computer program product or the computer program includes one or more computer instructions stored in a computer-readable storage medium. The one or more computer instructions, when read from the computer-readable storage medium and executed by a processor of a terminal device, cause the terminal device to implement the foregoing method for wireless communication on the terminal device side.

The embodiments of the present disclosure further provide a computer program product or a computer program. The computer program product or the computer program includes one or more computer instructions stored in a computer-readable storage medium. The one or more computer instructions, when read from the computer-readable storage medium and executed by a processor of a network device, cause the network device to implement the foregoing method for wireless communication on the network device side.

It should be understood that the term "indication" mentioned in the embodiments of the present disclosure may be a direct indication, an indirect indication, or an indication that an association relationship is present. For example, "A indicates B" may mean that A directly indicates B, for example, B may be obtained through A; or may mean that A indirectly indicates B, for example, A indicates C through which B may be obtained; or may mean an association relationship is present between A and B.

In the description of the embodiments of the present disclosure, the term "corresponding" may indicate a direct corresponding relationship or an indirect corresponding relationship between two items, or an association relationship between the two items, or a relationship such as indicating and being indicated, configuring and being configured, or the like.

In some embodiments of the present disclosure, the term "predefinition" may be implemented by pre-storing a corresponding code, a corresponding table, or another method that may be used to indicate relevant information in a device (such as a terminal device or a network device), and a specific implementation thereof is not limited in the present disclosure. For example, the term "predefined" may be "defined" in a protocol.

In some embodiments of the present disclosure, the term "protocol" may be a standard protocol in the field of communication, and for example, may include an LTE protocol, an NR protocol, and a related protocol applicable to a future communication system. This is not limited in the present disclosure.

The term "a plurality of" herein means two or more. The term "and/or" describes an association relationship of associated objects, and it indicates three types of relationships. For example, the phrase "A and/or B" means (A), (B), or (A and B). The character "/" usually indicates an "or" relationship between the associated objects.

**In** addition, the serial numbers of the processes described herein only exemplifies one possible execution sequence among the processes. In some other embodiments, the above processes may also be executed without following the numbering sequence. For example, two processes with different serial numbers are executed simultaneously or in an order reverse to the order shown in the figures. This is not limited in the embodiments of the present disclosure.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above is merely exemplary embodiments of the present disclosure and is not intended to limit the present disclosure. Any modification, equivalent replacement, and improvement, and the like, made within the spirit and principle of the present disclosure shall be fall within the protection scope of the present disclosure.

## Claims

1. A method for wireless communication, applicable to a terminal device, the method comprising:
receiving first configuration information, wherein the first configuration information is used for determining a wake-up signal resource, wherein the wake-up signal resource comprises a resource used for transmitting a wake-up signal to a network device; and
determining a first wake-up signal resource based on the first configuration information, wherein the first wake-up signal resource comprises a wake-up signal resource accessible by the terminal device.

2. The method according to claim 1, wherein determining the first wake-up signal resource based on the first configuration information comprises:
determining the first wake-up signal resource based on the first configuration information and at least one of a first time period, second configuration information, or first downlink control information (DCI), wherein
the first time period is determined based on a configuration or configuration information of the network device, the second configuration information is used for configuring a symbol transmission direction, and the first DCI is used for indicating the symbol transmission direction.

3. The method according to claim 1 or 2, wherein determining the first wake-up signal resource based on the first configuration information comprises:
determining at least one group of wake-up signal resources based on the first configuration information; and
determining the first wake-up signal resource based on the at least one group of wake-up signal resources, wherein the first wake-up signal resource comprises some or all wake-up signal resources in the at least one group of wake-up signal resources.

4. The method according to claim 3, wherein
the at least one group of wake-up signal resources comprises at least one of an effective wake-up signal resource or an ineffective wake-up signal resource; and
determining the first wake-up signal resource based on the at least one group of wake-up signal resources comprises:
determining the first wake-up signal resource based on the at least one group of wake-up signal resources and at least one of a first time period, second configuration information, or first DCI, wherein the first wake-up signal resource comprises the effective wake-up signal resource.

5. The method according to claim 4, wherein the effective wake-up signal resource comprises a wake-up signal resource within the first time period; and/or the ineffective wake-up signal resource comprises a wake-up signal resource not within the first time period.

6. The method according to claim 4 or 5, wherein a symbol transmission direction corresponding to the effective wake-up signal resource is configured as an uplink symbol or a flexible symbol by the second configuration information; and/or a transmission direction of at least one symbol corresponding to the ineffective wake-up signal resource is configured as a downlink symbol by the second configuration information.

7. The method according to claim 4 or 5, wherein a symbol transmission direction corresponding to the effective wake-up signal resource is configured as an uplink symbol by the second configuration information; and/or a transmission direction of at least one symbol corresponding to the ineffective wake-up signal resource is configured as a downlink symbol or a flexible symbol by the second configuration information.

8. The method according to any one of claims 4 to 7, wherein a symbol transmission direction corresponding to the effective wake-up signal resource is indicated as an uplink symbol by the first DCI; and/or a transmission direction of at least one symbol corresponding to the ineffective wake-up signal resource is indicated as a downlink symbol or a flexible symbol by the first DCI.

9. The method according to any one of claims 4 to 7, wherein a symbol transmission direction corresponding to the effective wake-up signal resource is indicated as an uplink symbol or a flexible symbol by the first DCI; and/or a transmission direction of at least one symbol corresponding to the ineffective wake-up signal resource is indicated as a downlink symbol by the first DCI.

10. The method according to any one of claims 3 to 9, wherein different groups of wake-up signal resources have at least one of the following characteristics:
at least one wake-up signal resource in the different groups of wake-up signal resources is different;
the different groups of wake-up signal resources correspond to different priorities;
the different groups of wake-up signal resources correspond to different request channels;
the different groups of wake-up signal resources correspond to different purposes;
the different groups of wake-up signal resources correspond to different service types; or
the different groups of wake-up signal resources are associated with different terminal devices.

11. The method according to claim 10, wherein the priority is associated with at least one of the request channel, the purpose, or the service type.

12. The method according to any one of claims 2 to 11, wherein the first time period is related to a sleep mode of the network device, and the first time period comprises: a time period within which the network device is in the sleep mode; and/or a time period corresponding to a transition time for the network device to be in the sleep mode.

13. The method according to any one of claims 1 to 12, wherein the first configuration information is carried over at least one of a system message, radio resource control (RRC) signaling, a medium access control (MAC) control element (CE), or downlink control information (DCI).

14. The method according to claim 13, wherein
the first configuration information is carried over the RRC signaling, and the RRC signaling is used for indicating at least one group of wake-up signal resources; and
the first configuration information is used for determining the wake-up signal resource, wherein the wake-up signal resource comprises the at least one group of wake-up signal resources.

15. The method according to claim 13, wherein
the first configuration information is carried over the RRC signaling and the DCI, the RRC signaling is used for indicating at least one group of wake-up signal resources, and the DCI is used for indicating activation or deactivation of one or more groups of wake-up signal resources in the at least one group of wake-up signal resources; and
the first configuration information is used for determining the wake-up signal resource, wherein the wake-up signal resource comprises one or more groups of activated wake-up signal resources in the at least one group of wake-up signal resources.

16. The method according to claim 13, wherein
the first configuration information is carried over the MAC CE, and the MAC CE is used for indicating at least one group of wake-up signal resources; and
the first configuration information is used for determining the wake-up signal resource, wherein the wake-up signal resource comprises the at least one group of wake-up signal resources.

17. The method according to claim 13, wherein
the first configuration information is carried over the RRC signaling and the MAC CE, the RRC signaling is used for indicating at least one group of wake-up signal resources, and the MAC CE is used for indicating activation or deactivation of one or more groups of wake-up signal resources in the at least one group of wake-up signal resources; and
the first configuration information is used for determining the wake-up signal resource, wherein the wake-up signal resource comprises one or more groups of activated wake-up signal resources in the at least one group of wake-up signal resources.

18. The method according to any one of claims 1 to 17, wherein the wake-up signal resources are different in at least one of:
time-domain positions of the wake-up signal resources being different;
frequency-domain positions of the wake-up signal resources being different; or
the wake-up signal resources being associated with different sequences.

19. A method for wireless communication, applicable to a network device, the method comprising:
transmitting first configuration information to a terminal device, wherein the first configuration information is used for determining a first wake-up signal resource, wherein the first wake-up signal resource comprises a wake-up signal resource accessible by the terminal device, wherein the wake-up signal resource comprises a resource used for transmitting a wake-up signal to the network device.

20. The method according to claim 19, further comprising:
transmitting at least one of indication information of a first time period, second configuration information, or first downlink control information (DCI) to the terminal device;
wherein the second configuration information is used for configuring a symbol transmission direction, the first DCI is used for indicating the symbol transmission direction, and the first wake-up signal resource is determined based on the first configuration information and at least one of the first time period, the second configuration information, or the first DCI.

21. The method according to claim 19 or 20, wherein the first configuration information is used for indicating at least one group of wake-up signal resources, and the first wake-up signal resource comprises some or all wake-up signal resources in the at least one group of wake-up signal resources.

22. The method according to claim 21, wherein the at least one group of wake-up signal resources comprises an effective wake-up signal resource and/or an ineffective wake-up signal resource, and the first wake-up signal resource comprises the effective wake-up signal resource.

23. The method according to claim 22, wherein the effective wake-up signal resource comprises a wake-up signal resource within the first time period; and/or the ineffective wake-up signal resource comprises a wake-up signal resource not within the first time period.

24. The method according to claim 22 or 23, wherein a symbol transmission direction corresponding to the effective wake-up signal resource is configured as an uplink symbol or a flexible symbol by the second configuration information; and/or a transmission direction of at least one symbol corresponding to the ineffective wake-up signal resource is configured as a downlink symbol by the second configuration information.

25. The method according to claim 22 or 23, wherein a symbol transmission direction corresponding to the effective wake-up signal resource is configured as an uplink symbol by the second configuration information; and/or a transmission direction of at least one symbol corresponding to the ineffective wake-up signal resource is configured as a downlink symbol or a flexible symbol by the second configuration information.

26. The method according to any one of claims 22 to 25, wherein a symbol transmission direction corresponding to the effective wake-up signal resource is indicated as an uplink symbol by the first DCI; and/or a transmission direction of at least one symbol corresponding to the ineffective wake-up signal resource is indicated as a downlink symbol or a flexible symbol by the first DCI.

27. The method according to any one of claims 22 to 25, wherein a symbol transmission direction corresponding to the effective wake-up signal resource is indicated as an uplink symbol or a flexible symbol by the first DCI; and/or a transmission direction of at least one symbol corresponding to the ineffective wake-up signal resource is indicated as a downlink symbol by the first DCI.

28. The method according to any one of claims 21 to 27, wherein different groups of wake-up signal resources have at least one of the following characteristics:
at least one wake-up signal resource in the different groups of wake-up signal resources is different;
the different groups of wake-up signal resources correspond to different priorities;
the different groups of wake-up signal resources correspond to different request channels;
the different groups of wake-up signal resources correspond to different purposes;
the different groups of wake-up signal resources correspond to different service types; or
the different groups of wake-up signal resources are associated with different terminal devices.

29. The method according to claim 28, wherein the priority is associated with at least one of the request channel, the purpose, or the service type.

30. The method according to any one of claims 20 to 29, wherein the first time period is related to a sleep mode of the network device, and the first time period comprises: a time period within which the network device is in the sleep mode; and/or a time period corresponding to a transition time for the network device to be in the sleep mode.

31. The method according to any one of claims 19 to 30, wherein the first configuration information is carried over at least one of a system message, radio resource control (RRC) signaling, a medium access control (MAC) control element (CE), or downlink control information (DCI).

32. The method according to claim 31, wherein
the first configuration information is carried over the RRC signaling, and the RRC signaling is used for indicating at least one group of wake-up signal resources; and
the first configuration information is used for determining the wake-up signal resource, wherein the wake-up signal resource comprises the at least one group of wake-up signal resources.

33. The method according to claim 31, wherein
the first configuration information is carried over the RRC signaling and the DCI, the RRC signaling is used for indicating the at least one group of wake-up signal resources, and the DCI is used for indicating activation or deactivation of one or more groups of wake-up signal resources in the at least one group of wake-up signal resources; and
the first configuration information is used for determining the wake-up signal resource, wherein the wake-up signal resource comprises one or more groups of activated wake-up signal resources in the at least one group of wake-up signal resources.

34. The method according to claim 31, wherein
the first configuration information is carried over the MAC CE, and the MAC CE is used for indicating at least one group of wake-up signal resources; and
the first configuration information is used for determining the wake-up signal resource, wherein the wake-up signal resource comprises the at least one group of wake-up signal resources.

35. The method according to claim 31, wherein
the first configuration information is carried over the RRC signaling and the MAC CE, the RRC signaling is used for indicating at least one group of wake-up signal resources, and the MAC CE is used for indicating activation or deactivation of one or more groups of wake-up signal resources in the at least one group of wake-up signal resources; and
the first configuration information is used for determining the wake-up signal resource, wherein the wake-up signal resource comprises one or more groups of activated wake-up signal resources in the at least one group of wake-up signal resources.

36. The method according to any one of claims 19 to 35, wherein the wake-up signal resources are different in at least one of:
time-domain positions of the wake-up signal resources being different;
frequency-domain positions of the wake-up signal resources being different; or
the wake-up signal resources being associated with different sequences.

37. An apparatus for wireless communication, comprising:
a receiving module, configured to receive first configuration information, wherein the first configuration information is used for determining a wake-up signal resource, wherein the wake-up signal resource comprises a resource used for transmitting a wake-up signal to a network device; and
a processing module, configured to determine a first wake-up signal resource based on the first configuration information, wherein the first wake-up signal resource comprises a wake-up signal resource accessible by a terminal device.

38. An apparatus for wireless communication, comprising:
a transmitting module, configured to transmit first configuration information to a terminal device, wherein the first configuration information is used for determining a first wake-up signal resource, wherein the first wake-up signal resource comprises a wake-up signal resource accessible by the terminal device, wherein the wake-up signal resource comprises a resource used for transmitting a wake-up signal to a network device.

39. A terminal device, comprising: a processor and a memory, wherein the memory is configured to store one or more computer programs, wherein the processor, when loading and running the one or more computer programs, is caused to perform the method as defined in any one of claims 1 to 18.

40. A network device, comprising: a processor and a memory, wherein the memory is configured to store one or more computer programs, wherein the processor, when loading and running the one or more computer programs, is caused to perform the method as defined in any one of claims 19 to 36.

41. A computer-readable storage medium, storing one or more computer programs, wherein the one or more computer programs, when loaded and run by a processor, cause the processor to perform the method as defined in any one of claims 1 to 18 or the method as defined in any one of claims 19 to 36.

42. A chip, comprising: a programmable logic circuit and/or one or more program instructions, wherein the chip, when running, is caused to perform the method as defined in any one of claims 1 to 18 or the method as defined in any one of claims 19 to 36.

43. A computer program product, comprising: one or more computer instructions stored in a computer-readable storage medium, and the one or more computer instructions, when read from the computer-readable storage medium and executed by a processor, cause the processor to perform the method as defined in any one of claims 1 to 18 or the method as defined in any one of claims 19 to 36.

44. A system for wireless communication, comprising: a terminal device and a network device, wherein the terminal device is configured to perform the method as defined in any one of claims 1 to 18, and/or the network device is configured to perform the method as defined in any one of claims 19 to 36.
